# EUROPEAN PATENT SPECIFICATION

(11) **EP 2 319 302 B1**
(45) Date of publication and mention of the grant of the patent: **27.07.2016**
(21) Application number: 10188686.9
(22) Date of filing: 25.10.2010
(51) Int. Cl.: A01M 1/04, A01M 1/22

(54) **INSECT TRAP**
INSEKTENFALLE
PIÈGE À INSECTES

(30) Priority: 04.11.2009 GB 0919316
(43) Date of publication of application: 11.05.2011
(73) Proprietor: Pelsis Limited, Grimbald Crag Close Knaresborough North Yorkshire HG5 8QB (GB)
(72) Inventor: Holmes, Thomas, Michael, Knaresborough, Yorkshire HG5 8QB (GB)
(74) Representative: Appleyard Lees IP LLP

(56) References cited:
- EP-A2- 2 060 177
- DE-C1- 3 810 065
- FR-A- 992 702
- FR-A- 1 333 698
- FR-A1- 2 176 767
- FR-E- 55 081
- GB-A- 1 456 477
- US-A- 4 908 979
- US-A- 5 311 696

## Description

The invention relates to an insect trap. Particularly, the invention relates to an insect trap incorporating means for electrocuting flying insects.

Insect traps for attracting flying insects are known. Such devices often incorporate illumination means, for example, an ultraviolet light (UV) which lures the insects into the trap. Once lured in, there are generally two methods for trapping or killing the insects; either by using an electrified grid which electrocutes the insects upon contact, or using a sticky board or "glueboard" which immobilises the insects.

Known insect traps incorporating an electrified grid, commonly comprise three sections: a base section for housing a tray for catching dead insects; a middle section comprising electrocuting means, for example, a killing grid; and a top section for housing the electrical components of the trap, including the transformer, chokes for lighting the lamps and killing grid connectors. The top section comprises a blanketed cover for the electrical components, being configured to prevent a user from inadvertently touching said components. Disadvantageously, a large proportion of light from the illumination means is blocked from being emitted from the trap due to the configuration of the top section. This results in reduced efficiency of the insect trap to attract insects.

French Patent No. FR2176767 discloses a device for electrocuting insects and disinfecting the air, the device having a substantially zig-zag form.

It is an object of the invention to provide an insect trap having an improved efficiency of attracting insects.

According to the present invention there is provided an insect trap according to claim 1.

Preferably, a screen is provided on the body of any one of the aforementioned aspects. Preferably, the screen is connectable to the body, preferably by connecting means. Preferably, the connecting means comprise a resilient member. Preferably, the connecting means comprise a latch arrangement.

Preferably, the screen comprises at least one aperture through which light from the illumination means is emitted out from the insect trap. Preferably, a plurality of apertures is provided in the screen. Preferably, the apertures are arranged as rows and/or columns on the screen. Preferably, the number of rows is equal to the number of columns.

Preferably, the screen is arcuate in shape. Preferably, the screen comprises an end section of the insect trap, preferably an upper end thereof when the insect trap is in an operating configuration. Preferably, the screen comprises a top section of said trap in an operating configuration. Preferably, the screen is mounted on the body remote from a base portion of the insect trap when said trap is in an operating configuration.

Preferably, the screen is adapted to enclose at least a portion of the illumination means. Preferably, the screen is adapted to enclose substantially all of the illumination means.

Ligth from the illumination means is emitted out from the screen in a range between 180° and 360º about the axis. Said light is emitted out of the screen substantially more than 180º about the axis. Light from the illumination means is emitted out from the screen in a continuous sweep about the axis. The light may pass out of the screen in an orthogonal direction to the axis.

A insect exterminating means is located on the body. The exterminating means comprises an electrocuting member. Preferably, the electrocuting member comprises at least one killing grid, preferably two killing grids, preferably one rearwardly facing grid and one forwardly facing grid, being operable to provide an electric current for electrocuting an insect upon contact therewith. The exterminating means is located adjacent the illumination means. Said electrocuting member is substantially "Z" shaped.

Preferably, the body comprises a first side wall, a second side wall, and preferably a base portion. The term base portion will be understood to mean an end of the insect trap which lies adjacent a wall or floor during operation, preferably a lower part of the insect trap in operation. Preferably, the first and/or the second side wall comprises at least one opening. Preferably, said first and/or second sidewall comprises a plurality of openings therein. Preferably, the screen is connectable to the or each side wall.

Electrical components are provided for operating the exterminating means. Preferably, the electrical components are located remote from the screen, remote from the top section of the insect trap when in an operating configuration.

The electrical components are located in the base portion of the insect trap when said trap is in an operating configuration.

Preferably, the electrical components comprises at least one transformer, choke, connection points for making electrical contact with the exterminating means, and electrical connecting means for connecting said components to the exterminating means. Preferably, the transformer is located adjacent a first sidewall of the body, and preferably adjacent the base portion. Preferably, the choke is located adjacent a second sidewall of the body and preferably adjacent the base portion. Preferably, the connection point is located in the first and/or second sidewall.

Preferably, a channel is provided in the or each said sidewall. Preferably, the channel extends the length of the sidewall, preferably, extending from the base portion of the trap to the top section. Preferably, the electrical connecting means is located in the channel.

Preferably, an immobilisation means for immobilising an insect is located on the body. Preferably, the immobilisation means comprise an adhesive backed substrate, most preferably a sticky board or glue board.

Preferably, the axis is a longitudinal axis of the body.

A insect catch tray is provided on the insect trap. Said tray extends parallel to the longitudinal axis of the body. Said tray extends parallel to the illumination means. Preferably, said tray is located adjacent the illumination means. Preferably, said tray is removably fixed to the body of the insect trap.

The illumination means is mounted on the body. Preferably, the illumination means comprise a UV light source, preferably a UV-A light source. The illumination means may comprise a plurality of light tubes, preferably UV light tubes. Preferably, the or each light tube is arranged substantially parallel to a longitudinal axis of the insect trap, preferably, a front portion of said trap, preferably in a spaced arrangement. However, it is accepted that there are numerous alternative shapes and configurations of UV light tubes, which are also recognised within these claims. The or each light may be arranged perpendicular to the longitudinal axis of the trap. Preferably, the or each light tube emits light having a wavelength 350nm to 370nm.

Advantageously, the arrangement of the invention enables light emitted from the illumination means to pass out if the trap in any direction about the axis. In so doing, insects may be attracted to the trap from a range of directions which results in more insects being attracted and an increase in the number of insects exterminated.

Due to the electrical components being located in the base portion of the trap, the light emitted from the trap is not obstructed as in the prior art device. This results in an increased number of insects attracted to the trap.

The arrangement allows a significantly increased amount of UV light to be emitted from the insect trap in comparison to traditional known insect traps. Advantageously, said increase in emitted UV light results in an increased attraction and subsequent catching of insects. Further, the arrangement may also attract flying insects more quickly than conventional insect traps, in addition to simply attracting a greater number of insects. Additionally, differing species of insects which are known to be active at higher flying heights than other species may be targeted by the arrangement of the invention.

In configuring the insect trap of the present invention, a number of difficulties have been overcome to provide a commercial product. Such difficulties include providing a solution to the significantly increased complexity of internal product wiring, and linking the power supply, transformer, killing grid, choke(s), UV tubes and starters. The 'killing grid connection points' which connect the transformer wires to the front and back killing grids are positioned in the sidewalls, as the traditional position of these parts in the base of the electrics compartment is not available in the present invention, due to the reposition of the electrics section to the bottom of the insect trap.

In the device of the present invention, the 'killing grid connection points' are located to the side of the product, however, it will be understood by the skilled reader that said points may be positioned at the top section of the electrical compartment or in a location which does not restrict the amount of UV light that is emitted from the top section of the insect trap.

The advantage of the invention is the ability to 'open up' the top section of the insect trap, thereby maximising the UV light irradiance from the trap. The insect trap of the present invention allows light to be emitted from, in particular, the top of the insect trap.

All of the features described herein may be combined with any of the above aspects, in any combination.

An embodiment of the invention will now be described, by way of example only, with reference to the accompanying drawings, wherein:
Figure 1 shows a schematic perspective view of a prior art insect trap;
Figure 2 shows a schematic perspective view of a part of a prior art insect trap with the protective electrics cover removed;
Figure 3 shows a schematic front view of a prior art insect trap;
Figure 4 shows a schematic side sectional view of a prior art insect trap;
Figure 5 shows a schematic side view of a prior art insect trap;
Figure 6 shows a schematic perspective view of an insect trap according to the invention;
Figure 7 shows a schematic front view of an insect trap according to the invention;
Figure 8 shows a schematic perspective view of part of an insect trap according to the invention;
Figure 9 shows a schematic cross sectional side view of an insect trap according to the invention;
Figure 10 shows a schematic side view of an insect trap according to the invention;
Figure 11 shows a graph of test results from comparative trials;
Figure 12 shows a graph of test results from comparative trials;
Figure 13 shows a schematic perspective view of an alternative embodiment of an insect trap according to the invention; and
Figure 14 shows a schematic side view of an alternative embodiment of an insect trap according to the invention.

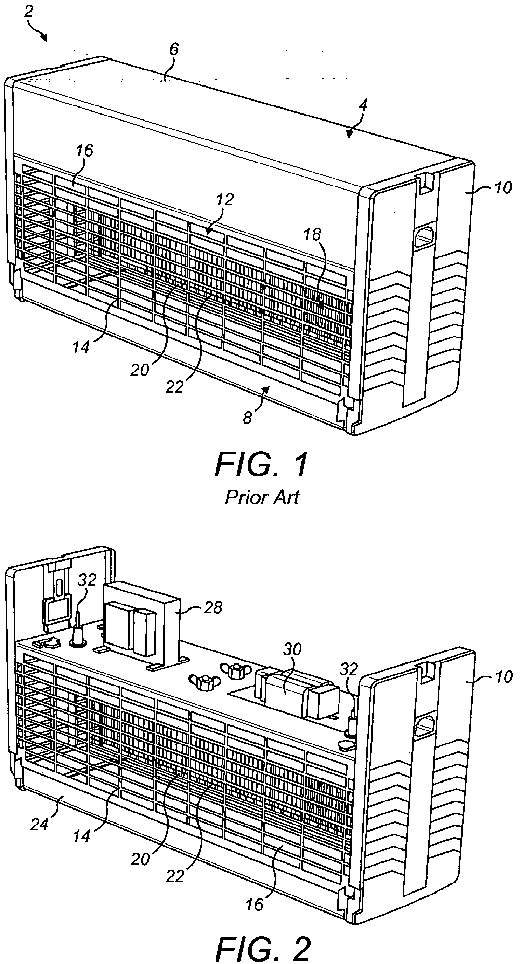

Figure 1 shows a typical insect trap 2 known from the prior art. The insect trap 2 comprises a body 4 having a top section 6, a base 8, and side walls 10 therebetween. A face 12 of the insect trap 2 comprises a meshed screen 14 which is configured to allow light to pass through the insect trap 2.

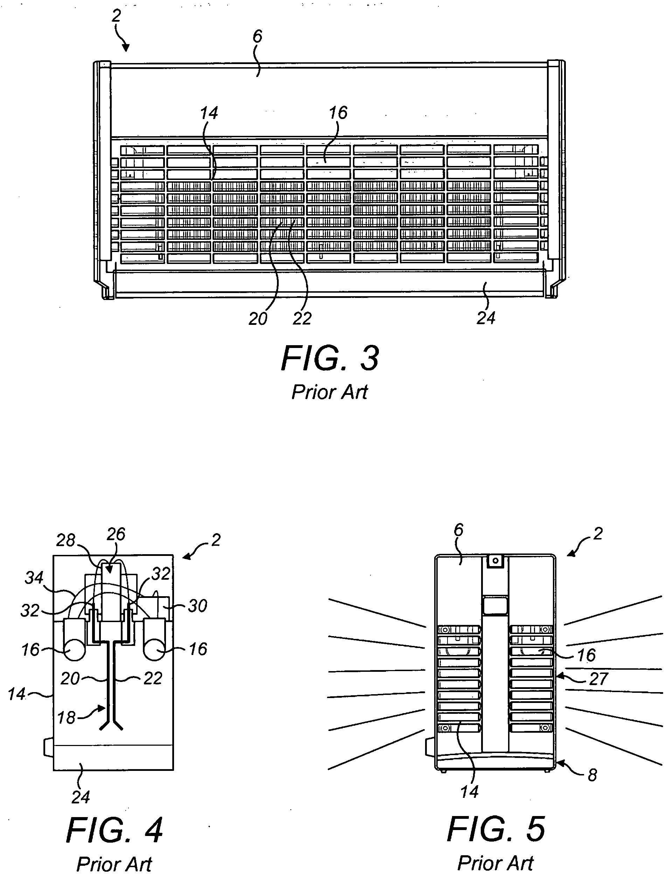

Illumination means 16 are located inside of the body 4. Adjacent the illumination means 16 there is provided a killing grid 18. The killing grid is operable to electrocute insects upon contact. The killing grid 18 comprises a front portion 20 and a rear portion 22 shown most clearly in Figure 4. A catch tray 24 is located in the base 8 of the trap 2 and is dimensioned to catch insects falling from the killing grid 18.

Figure 2 shows the location of electrical components 26 of the insect trap 2. The electrical components 26 are located in the top section 6 as shown in Figure 2. The electrical components 26 comprise a transformer 28, a choke 30, and connection points 32 for the killing grid 18. It will be understood by a person skilled in the art that the electrical components are operable to supply an electrical current to the killing grid 18.

Figure 3 shows a front view of the prior art insect trap 2. It is clear from the figure, that the top section 6 provides a blanketed or blocked cover over the electrical components 26. Due to the configuration of the electrical components 26 and the top section 6, a significant area of the insect trap 2 is cloaked, preventing light from passing through the top section of the trap.

Figure 4 further shows the arrangement of the electrical components 26 in the top section 6 of the prior art insect trap 2. In particular, it is shown that the transformer 28 and choke 30 are positioned to allow simple internal wiring 34 to link between the electrical components 26 and the killing grid 18. The effect of the arrangement of the components of the prior art insect trap 2 is shown in Figure 5 in which light from the trap 2 is restricted to being emitted from the middle section 27 of the trap 2. Disadvantageously, due to the configuration of the top section 6 housing the electrical components 26, light is unable to pass through the top section. As a result, a substantial area of the insect trap cannot be utilised to attract insects.

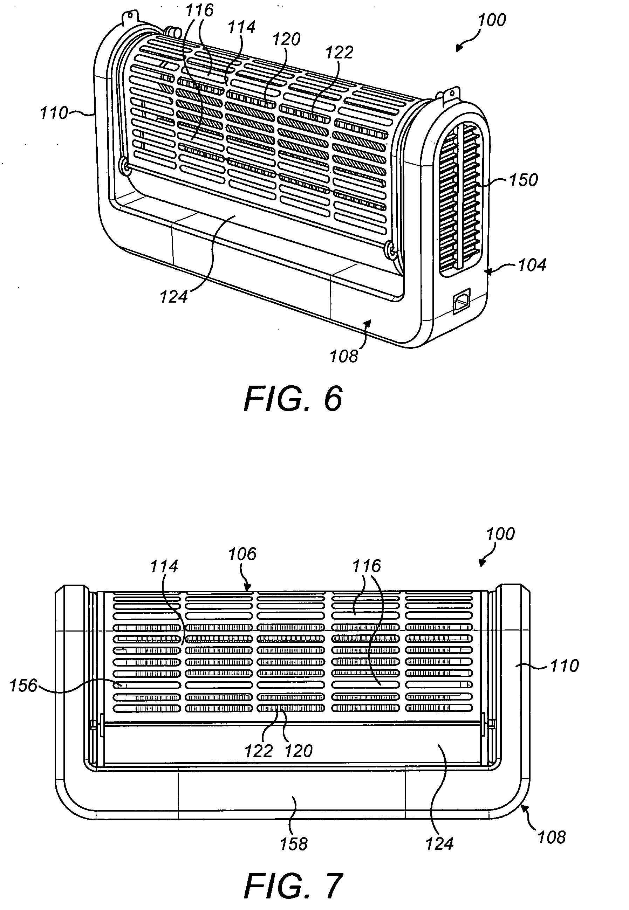

Figure 6 shows an insect trap 100 according to the invention. Like parts of the present invention and the prior art are given corresponding reference numerals. The insect trap 100 comprises a body 104 having a base 108 and side walls 110. The side walls 110 comprise apertures 150. The apertures 150 extend along a length of each side wall 110. The apertures 150 extend perpendicular to a longitudinal axis 152 of the insect trap 100. Illumination means 116 are provided on the insect trap 100. The illumination means comprise UV light tubes. In particular, two UV light tubes are provided each being 15 watts. The illumination means 116 are mounted parallel to the longitudinal axis 152 of the trap 100.

A screen 114 is provided on the body 104. The screen 114 comprises a mesh or grid arrangement to allow light to pass therethrough. The screen 114 provides a face and top section 106 of the insect trap 100 being curved at the uppermost part.

Figure 7 shows the screen 114 in further detail. It can be seen from the figure, that the screen 114 comprises a plurality of openings 156. Five openings 156 are shown in a row, each lying adjacent one another. Further, five columns of said openings 156 are provided in the screen 114.

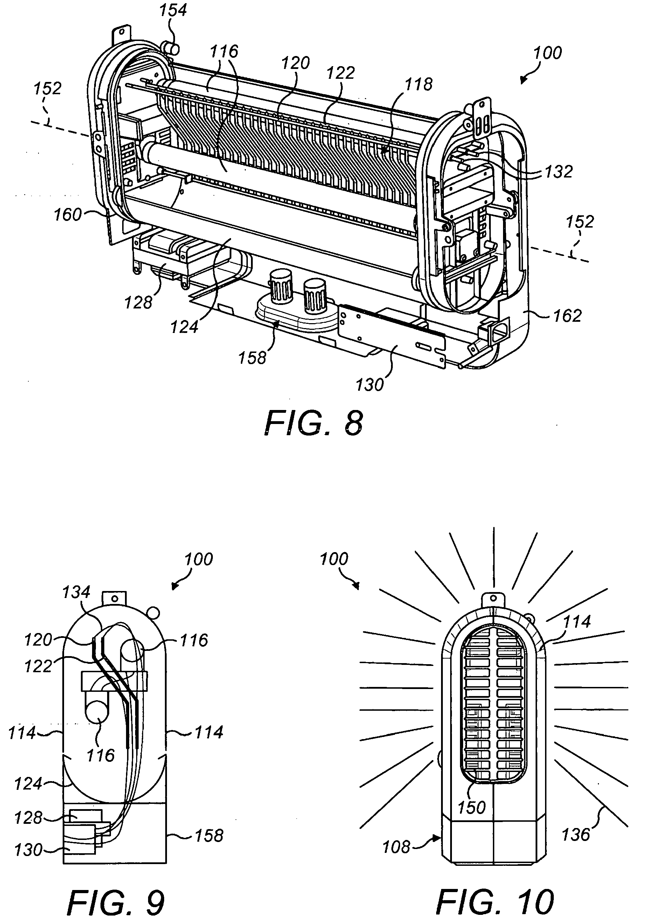

The screen 114 is connected to the body in such a manner as to be readily moved from the fly catching or operating position shown in Figure 6 to an open position shown in Figure 8 in which a user can readily access the inside of the insect trap 100 for repair or replacement of parts. Locking means 154 are provided on the body 104 comprising a catch or hooked arrangements allowing a user to simply unhook the screen 114 from the locking means 154 to allow the screen 114 to swing downwardly towards the base 108.

Figure 8 shows the insect trap 100 with the screen 114 removed. It can be seen that the insect trap comprises a killing grid 118 having a front portion 120 and a rear portion 122. The killing grid 118 is "Z" shaped providing an increased surface area for killing insects when compared to known traps. A catch tray 124 is located adjacent the compartment housing 158. The catch tray 124 is trough shaped comprising anti blow-out folds to enable large capacity for catching insects.

Figures 8 and 9 show the electrical components 26 in detail. It can be seen that the electrical components 26 are located in the compartment housing 158 adjacent the base 108 of the insect trap 100. The transformer 128 is located adjacent a first side wall 160 and the choke 130 is located adjacent the second side wall 162. The wiring 134 is channelled upwardly from the compartment housing 158 to connect with the killing grid 118 and the illumination means 116. The connection points 132 are located in the side walls 110. However, the connection points 132 may be positioned towards the top of the component housing 158 or any position which does not restrict the amount of UV light that is emitted through the top section 106 of the insect trap 100.

Figure 10 illustrates that due to the configuration of the insect trap 100, light is able to be emitted through the screen in a substantially continuous sweep, preferably through a range of greater than 180º about the axis 152.

In use, the illumination means is switched on and light is emitted through a continuous sweep out of the screen. Insects are attracted to the light and fly through the screen. Upon contact with the killing grid, the insects are killed and the body drops into the catch tray to be disposed of at a suitable time.

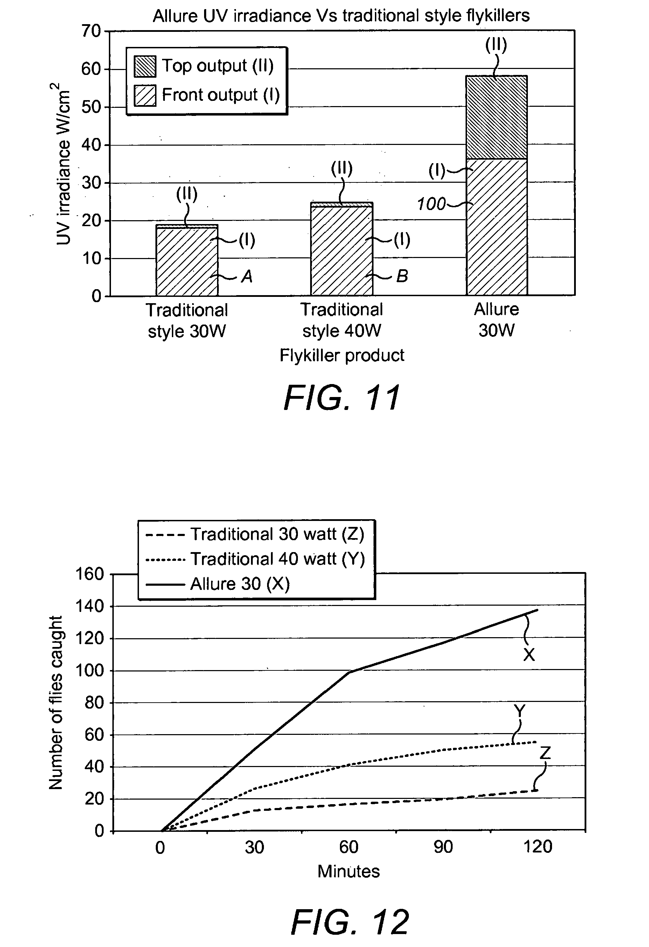

The insect trap 100 of the present invention has been performance tested against a traditional insect trap. Figure 11 is a graph showing the amount of light irradiance from a light source in an insect trap. The light emitting from a traditional style 30 watt insect trap (A), a traditional style 40 watt insect (B) and the insect trap 100 of the present invention were tested using a spectra radiometer which measures the amount of light irradiance from a light source. The graph shows the amount of UV irradiance from the front face of each insect trap (lighter block shading referenced I) and the amount of UV emitted from the top section (darker block shading referenced II) of each insect trap. The irradiance from the top section is shown in the darker block colouring. Figure 11 shows the insect trap 100 of the present invention increases the amount of UV light irradiance when compared to a traditional 30 watt insect trap by approximately 68%.

Figure 12 shows a comparative graph between a traditional 30 watt insect trap (Z), a traditional 40 watt insect trap (Y), and the insect trap 100 of the present invention (marked X in Figure 12). The graph shows the number of flies caught in the trap over time. The results show that the insect trap 100 of the present invention captures a greater number of flying insects when compared to traditional traps. For example, it is shown that the insect trap 100 of the present invention catches 448% more flying insects when compared to a traditional 30 watt fly trap. The tests were carried out in a controlled environment as would be understood by a person skilled in the art.

Table 1 below shows data collected from the trials.

**Table 1**

| | **0** | **30** | **60** | **90** | **120** | **Total** |
|---|---|---|---|---|---|---|
| Traditional 30 watt | 0 | 13 | 16 | 19 | 25 | 11.2% |
| Traditional 40 watt | 0 | 27 | 41 | 50 | 55 | 26.6% |
| Allure 30 | 0 | 51 | 99 | 117 | 137 | 62.2% |
| | | | | | | |
| Total flies | | | | | | 650 |

The results show the insect trap of the present invention allows for an increase in the amount of UV light irradiance over a traditional 30w insect trap by 67.7%. The results further show that the trap of the present invention increases the catch of the flying insects (in this case the common house fly) over a traditional 30w insect trap by 448%.

These results are possible because the present invention relies upon the repositioning of the electrics compartment to the bottom of the trap, which is traditionally positioned at the top. Increasing the number of holes in the front screen at the top of the trap, this significantly increases the amount of UV light that escapes from the trap, so attracting flying insects to the product.

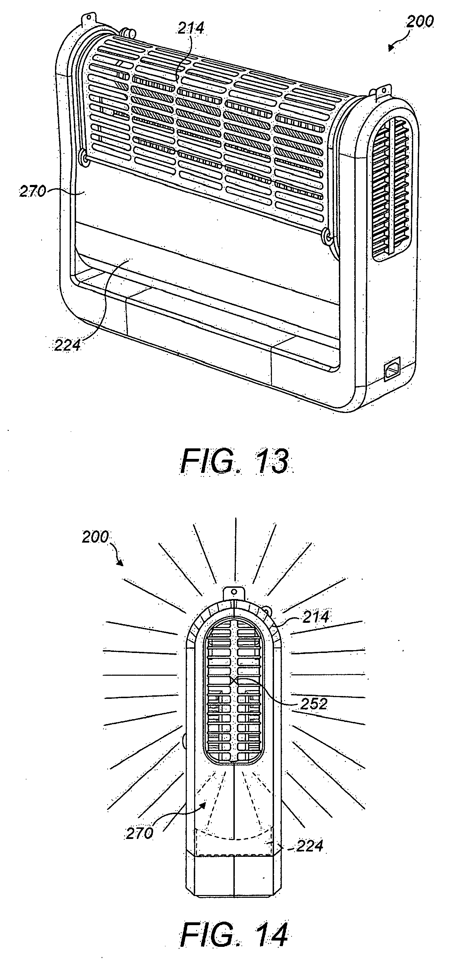

Figures 13 and 14 show an embodiment of the present invention. The difference between the insect trap 200 of said figures and those shown previously is that the catch tray 224 is located a distance from the screen 214 such that a gap 270 is provided between the screen 214 and the catch tray 224. Such a gap 270 further enhances the radially extent that the light may be emitted out of the insect trap. In particular, as shown in Figure 14, the light is emitted substantially 360º about the axis 252.

The insect trap of the present invention has an increased efficiency at attracting and catching flying insects when compared to traditionally known insect traps. This is due to the repositioning of the electrical components in the base of the trap. The screen 114 provides an increased area for light to be emitted from the trap due to the increased number of openings in the screen 114 at the top of the unit. Furthermore, it may also be the case that flying insects are attracted to the trap more quickly than they would be to a traditional insect trap. Advantageously, the insect trap of the present invention attracts insects more quickly as well as catching an increased number of said insects.

The insect trap of the present invention provides an advanced efficacy of trapping insects by maximising the UV light output of the illumination means. The configuration of the insect trap 100 ensures that light is emitted from the trap from the front, back, sides and top thereof. Test results show that the insect trap of the present invention has over 60% more useful UV light output than traditional fly traps using the same power UV tubes. Furthermore, the insect trap of the present invention comprises a Z shaped killing grid which provides an increased killing area in which to electrocute insects. The killing grid together with the catch tray and UV tubes are readily accessed due to the readily moveable screen. Advantageously, no additional tools are required in order to release the screen from the operating configuration to a cleaning configuration.

The arrangement of the screen 114 allows light 136 emitting from the trap 100 to pass freely through the screen 114 in a range of directions from 0º to 360º, preferably over 180º about the axis 152. The light is emitted in a substantially continuous path about the axis 152. This is primarily due to the positioning of the electrical components 126 in a component housing 158 located at the base 108 of the insect trap 100 which does not obstruct the light path. Further advantageously, the provision of the meshed screen, configured to enclose the illumination means, further enhances this effect.

The invention extends to any accompanying claims.

## Claims

1. An insect trap (100) comprising a body (104) having an axis (152), and illumination means (116),
the illumination means (116) for emitting a light for attracting insects to said trap (100),
wherein an electrical exterminating means for electrocuting an insect upon contact is provided on the body (104), the exterminating means comprising an electrocuting member (118), the electrocuting member being substantially "Z" shaped,
wherein the body (104) is adapted such that light from the illumination means (116) is emitted out from the insect trap (100) in a continuous range of at least 270° about the axis (152),
**characterised in that** an insect catch tray (124) is provided on the insect trap (100), said tray located to extend parallel to the axis (152) of the body (104) and disposed below the electrical exterminating means, and
**in that** electrical components (26) are provided for operating the exterminating means, the electrical components (26) being located in a base portion (108) of the insect trap (100) when said trap is in an operating configuration.

2. An insect trap (100) as claimed in any one of the preceding claims, wherein a screen (114) is provided on the body (104).

3. An insect trap (100) as claimed in claim 2, wherein the screen (114) comprises an end section of the insect trap.

4. An insect trap (100) as claimed in claim 3, wherein the end section comprises an upper end of the insect trap when the insect trap is in an operating configuration.

5. An insect trap (100) as claimed in any one of claims 2 to 4, wherein the screen (114) is mounted on the body (104) remote from the base portion (108) of the insect trap (100) when said trap is in an operating configuration.

6. An insect trap (100) as claimed in any one of claims 2 to 5, wherein the screen (114) is adapted to enclose substantially all of the illumination means (116).

7. An insect trap (100) as claimed in any one of the preceding claims, wherein the body (104) comprises a first side wall (110), a second side wall (110), and the base portion (108), wherein the first and/or the second side wall comprises at least one opening.

8. An insect trap (100) as claimed in any one of the preceding claims, wherein the illumination means (116) comprises a UV light source, said light source being operable to emit light having a wavelength 350nm to 370nm.

9. An insect trap (100) as claimed in any one of the preceding claims, wherein an immobilisation means for immobilising an insect is located on the body (104), the immobilisation means comprising an adhesive backed substrate.

## Patentansprüche

1. Insektenfalle (100) mit einem Hauptteil (104), der eine Achse (152) aufweist, und Beleuchtungsmitteln (116),
wobei die Beleuchtungsmittel (116) zum Emittieren eines Lichts zum Locken von Insekten in die Falle (100) dienen,
wobei an dem Hauptteil (104) ein elektrisches Tötungsmittel zum Töten eines Insekts durch Elektroschock bei Kontakt vorgesehen ist, wobei das Tötungsmittel ein Glied (118) zur Tötung durch Elektroschock umfasst, wobei das Glied zur Tötung durch Elektroschock im Wesentlichen "Z"-förmig ist,
wobei der Hauptteil (104) so ausgelegt ist, dass Licht von den Beleuchtungsmitteln (116) von der Insektenfalle (100) in einen kontinuierlichen Bereich von mindestens 270° um die Achse (152) emittiert wird,
**dadurch gekennzeichnet, dass** eine Insektenauffangwanne (124) an der Insektenfalle (100) vorgesehen ist, wobei sich die Wanne so befindet, dass sie sich parallel zu der Achse (152) des Hauptteils (104) erstreckt und unter den elektrischen Tötungsmitteln angeordnet ist, und
dass elektrische Komponenten (26) zum Betrieb des Tötungsmittels vorgesehen sind, wobei sich die elektrischen Komponenten (26) in einem Basisteil (108) der Insektenfalle (100) befindet, wenn sich die Falle in einer Betriebskonfiguration befindet.

2. Insektenfalle (100) nach einem der vorhergehenden Ansprüche, wobei ein Sieb (114) an dem Hauptteil (104) vorgesehen ist.

3. Insektenfalle (100) nach Anspruch 2, wobei das Sieb (114) einen Endteil der Insektenfalle umfasst.

4. Insektenfalle (100) nach Anspruch 3, wobei der Endteil ein oberes Ende der Insektenfalle umfasst, wenn sich die Insektenfalle in einer Betriebskonfiguration befindet.

5. Insektenfalle (100) nach einem der Ansprüche 2 bis 4, wobei das Sieb (114) entfernt von dem Basisteil (108) der Insektenfalle (100) an dem Hauptteil (104) angebracht ist, wenn sich die Falle in einer Betriebskonfiguration befindet.

6. Insektenfalle (100) nach einem der Ansprüche 2 bis 5, wobei das Sieb (114) dafür ausgelegt ist, die Beleuchtungsmittel (116) im Wesentlichen ganz einzuschließen.

7. Insektenfalle (100) nach einem der vorhergehenden Ansprüche, wobei der Hauptteil (104) eine ersten Seitenwand (110), eine zweite Seitenwand (110) und den Basisteil (108) umfasst, wobei die erste und/oder die zweite Seitenwand mindestens eine Öffnung umfassen.

8. Insektenfalle (100) nach einem der vorhergehenden Ansprüche, wobei die Beleuchtungsmittel (116) eine UV-Lichtquelle umfassen, wobei die Lichtquelle betreibbar ist, um Licht mit einer Wellenlänge von 350 nm bis 370 nm zu emittieren.

9. Insektenfalle (100) nach einem der vorhergehenden Ansprüche, wobei ein Immobilisierungsmittel zum Immobilisieren eines Insekts an dem Hauptteil (104) angeordnet ist, wobei das Immobilisierungsmittel ein Substrat mit klebender Rückseite umfasst.

## Revendications

1. Piège à insectes (100) comprenant un corps (104) présentant un axe (152), et des moyens d'éclairage (116), les moyens d'éclairage (116) servant à émettre une lumière pour attirer les insectes dans ledit piège (100),
dans lequel des moyens d'extermination électriques pour électrocuter un insecte par un contact sont prévus sur le corps (104), les moyens d'extermination comprenant un élément d'électrocution (118), l'élément d'électrocution étant sensiblement en forme de "Z",
dans lequel le corps (104) est conçu de telle sorte que la lumière émise par les moyens d'éclairage (116) soit émise hors du piège à insectes (100) dans une plage continue d'au moins 270° autour de l'axe (152),
**caractérisé en ce qu'**un plateau attrape-insecte (124) est disposé sur le piège à insectes (100), ledit plateau étant agencé de manière à s'étendre parallèlement à l'axe (152) du corps (104) et étant disposé en dessous des moyens d'extermination électriques, et
**en ce que** des composants électriques (26) sont prévus pour déclencher les moyens d'extermination, les composants électriques (26) étant situés dans une partie de base (108) du piège à insectes (100) lorsque ledit piège se trouve dans une configuration opérationnelle.

2. Piège à insectes (100) selon l'une quelconque des revendications précédentes, dans lequel un tamis (114) est prévu sur le corps (104).

3. Piège à insectes (100) selon la revendication 2, dans lequel le tamis (114) comprend une section d'extrémité du piège à insectes.

4. Piège à insectes (100) selon la revendication 3, dans lequel la section d'extrémité comprend une extrémité supérieure du piège à insectes lorsque le piège à insectes se trouve dans une configuration opérationnelle.

5. Piège à insectes (100) selon l'une quelconque des revendications 2 à 4, dans lequel le tamis (114) est monté sur le corps (104) à distance de la partie de base (108) du piège à insectes (100) lorsque ledit piège se trouve dans une configuration opérationnelle.

6. Piège à insectes (100) selon l'une quelconque des revendications 2 à 5, dans lequel le tamis (114) est apte à entourer sensiblement la totalité des moyens d'éclairage (116).

7. Piège à insectes (100) selon l'une quelconque des revendications précédentes, dans lequel le corps (104) comprend une première paroi latérale (110), une seconde paroi latérale (110) et la partie de base (108), dans lequel la première et/ou la seconde paroi(s) latérale (s) comporte(nt) au moins une ouverture.

8. Piège à insectes (100) selon l'une quelconque des revendications précédentes, dans lequel les moyens d'éclairage (116) comprennent une source de lumière ultraviolette (UV), ladite source de lumière étant utilisable pour émettre une lumière présentant une longueur d'onde de 350 nm à 370 nm.

9. Piège à insectes (100) selon l'une quelconque des revendications précédentes, dans lequel des moyens d'immobilisation pour immobiliser un insecte sont prévus sur le corps (104), les moyens d'immobilisation comprenant un substrat enduit d'un adhésif.
